(19) Europäisches Patentamt / European Patent Office / Office européen des brevets

(11) **EP 3 501 093 B1**

(12) **EUROPÄISCHE PATENTSCHRIFT**

(45) Veröffentlichungstag und Bekanntmachung des Hinweises auf die Patenterteilung:
**23.12.2020   Patentblatt 2020/52**

(21) Anmeldenummer: **17745652.2**

(22) Anmeldetag: **12.07.2017**

(51) Int Cl.:
*H02P 5/46* (2006.01)        *H02P 5/747* (2006.01)

(86) Internationale Anmeldenummer:
**PCT/EP2017/025202**

(87) Internationale Veröffentlichungsnummer:
**WO 2018/036660 (01.03.2018 Gazette 2018/09)**

(54) **VERFAHREN ZUM BETREIBEN EINES SYSTEMS MIT MECHANISCH MITEINANDER GEKOPPELTEN ANTRIEBEN UND ÜBERGEORDNETEM RECHNER UND SYSTEM**

METHOD FOR OPERATING A SYSTEM WITH DRIVES WHICH ARE MECHANICALLY COUPLED TOGETHER AND WITH A HIGHER-LEVEL COMPUTER, AND SYSTEM

PROCÉDÉ DE FONCTIONNEMENT D'UN SYSTÈME COMPORTANT DES ENTRAÎNEMENTS ACCOUPLÉS MÉCANIQUEMENT ENTRE EUX, ORDINATEUR SUPÉRIEUR ET SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2016   DE 102016010043**

(43) Veröffentlichungstag der Anmeldung:
**26.06.2019   Patentblatt 2019/26**

(73) Patentinhaber: **SEW-EURODRIVE GmbH & Co. KG 76646 Bruchsal (DE)**

(72) Erfinder:
• **PFAFF, Rainer**
  **76703 Kraichtal (DE)**
• **BRECHT, Roland**
  **76307 Karlsbad (DE)**
• **REINACHER, Nico**
  **76706 Dettenheim (DE)**

(56) Entgegenhaltungen:
| | |
|---|---|
| DE-A1-102010 020 598 | DE-A1-102013 002 782 |
| DE-A1-102013 016 770 | DE-A1-102014 115 881 |
| JP-A- 2003 219 692 | US-A1- 2005 067 984 |
| US-A1- 2011 018 482 | US-A1- 2016 052 423 |

**Beschreibung**

Die Erfindung betrifft ein Verfahren zum Betreiben eines Systems mit mechanisch miteinander, insbesondere schlupffrei, gekoppelten Antrieben und übergeordnetem Rechner.

Es ist allgemein bekannt, dass ein Mehrachsantrieb mehrere Antriebe aufweist. Unter Antrieb wird hier ein umrichtergespeister Elektromotor verstanden, dessen Geschwindigkeit, also Drehzahl, mittels des Umrichters regelbar ist. Hierzu weist der Antrieb jeweils eine Drehzahlerfassung auf, also eine Erfassung der Drehgeschwindigkeit der vom Antrieb angetriebenen Welle.

**Aus der** DE 10 2013 002 782 A1 **ist ein Achsantrieb mit Vorrichtung zur Reduzierung des mechanischen Spiels bekannt.**

**Aus der** DE 10 2013 016 770 A1 **ist eine Motorsteuervorrichtung zur Steuerung einer Vielzahl von Motoren bekannt, die einen angetriebenen Körper antreiben.**

**Aus der** DE 10 2014 115 881 A1 **ist ein Verfahren zum Vergrößern eines Stromerfassungsbereichs in einem System mit einem mehrphasigen Motor bekannt.**

**Aus der** DE 10 2010 020 598 A1 **ist ein Verfahren zur Kupplungssteuerung zum Starten einer Maschine mit Hybridgetriebe bekannt.**

Der Erfindung liegt daher die Aufgabe zugrunde, Antriebe eines Mehrachsantriebs gemeinsam zu betreiben, insbesondere wobei eine einfache Kommunikation erreichbar sein soll.

Erfindungsgemäß wird die Aufgabe bei dem Verfahren nach den in Anspruch 1 angegebenen Merkmalen gelöst.

Wichtige Merkmale der Erfindung bei dem Verfahren sind, dass das Verfahren zum Betreiben eines Systems mit mechanisch miteinander, insbesondere schlupffrei, gekoppelten Antrieben und übergeordnetem Rechner, welcher mittels Datenbusverbindung mit den Antrieben verbunden ist, vorgesehen ist,

wobei in jedem Antrieb ein jeweiliger Größenistwert, also Istwert einer physikalischen Größe des jeweiligen Antriebs, bestimmt und, insbesondere mittels Datenbusverbindung, an den übergeordneten Rechner übertragen wird,

wobei der übergeordnete Rechner für jeden Antrieb einen diesem jeweiligen Antrieb zugeordneten Größensollwert, also Sollwert einer physikalischen Größe des jeweiligen Antriebs, bestimmt,

wobei der übergeordnete Rechner Regler aufweist, wobei jedem Antrieb einer der Regler, insbesondere eineindeutig, zugeordnet ist,

wobei der dem jeweiligen Antrieb zugeordnete Regler den Größenistwert des jeweiligen Antriebs auf den Größensollwert des jeweiligen Antriebs hin regelt, indem er als Stellwert einen dem jeweiligen Antrieb zugeordneten Geschwindigkeitssollwert bestimmt und, insbesondere mittels Datenbusverbindung, an den jeweiligen Antrieb übermittelt,

wobei der jeweilige Antrieb einen jeweiligen Regler aufweist, welchem der jeweilige, im Antrieb bestimmte Geschwindigkeitsistwert eines Elektromotors des Antriebs zugeführt wird und welcher diesen jeweiligen Geschwindigkeitsistwert auf den vom übergeordneten Rechner übermittelten, jeweiligen Geschwindigkeitssollwert hin regelt, indem er die Motorspannung oder den Motorstrom des Elektromotors des jeweiligen Antriebs stellt.

Von Vorteil ist dabei, dass jeder Antrieb eine vom umrichtergespeisten Elektromotor des Antriebs angetriebene Welle aufweist, deren Geschwindigkeit entsprechend der Vorgabe vom übergeordneten Rechner geregelt wird, wobei diese Geschwindigkeitsvorgabe vom übergeordneten Rechner derart bestimmt wird, dass das Drehmoment des Antriebs auf einen gewünschten Sollwert hin geregelt wird. Dieser gewünschte Sollwert wiederum ist als Funktion der Istwerte der Drehmomente der Antriebe bestimmt.

Weiter ist von Vorteil, dass die Antriebe gleichartig betrieben werden - insbesondere im Unterschied zur Master-Slave-Regelung, bei welcher der Master anders als die Slaves betrieben wird. Außerdem ist bei dem erfindungsgemäßen Verfahren für alle Antriebe dieselbe Datenübertragungsrate notwendig. Keiner der Antriebe benötigt eine größere oder kleinere Datenübertragungsrate als die anderen Antriebe.

Somit sind die Antriebe eines Mehrachsantriebs gemeinsam betreibbar, wobei eine einfache Kommunikation erreichbar ist.

**Erfindungsgemäß** wird statt der Größe eine andere Größe verwendet, insbesondere also derart umgeschaltet wird, dass statt des Istwerts der physikalischen Größe des jeweiligen Antriebs der Istwert einer anderen physikalischen Größe des jeweiligen Antriebs verwendet wird und dass statt des Sollwerts der physikalischen Größe des jeweiligen Antriebs der Sollwert der anderen physikalischen Größe des jeweiligen Antriebs verwendet wird. Von Vorteil ist dabei, dass eine verbesserte Regelung erzielbar ist. Abhängig von der jeweiligen Anwendung ist somit ein Regelverfahren anwendbar, das eine verbesserte Regelgüte aufweist.

Bei einer vorteilhaften Ausgestaltung ist die jeweilige Größe die jeweilige Position oder das jeweilige Drehmoment des jeweiligen Antriebs. Von Vorteil ist dabei, dass zwischen zwei verschiedenen Regelverfahren das bessere auswählbar ist, also das für die jeweilige Applikation, wie Maschine oder Anlage, jeweils bessere.

Bei einer vorteilhaften Ausgestaltung weisen die Regler der Antriebe und/oder die Regler des übergeordneten Rechners jeweils lineare Regler sind, insbesondere einen PI-Regler auf. Von Vorteil ist dabei, dass eine einfache Realisierung ermöglicht ist.

Bei einer vorteilhaften Ausgestaltung weist der jeweilige Antrieb einen von einem jeweiligen Umrichter des Antriebs gespeisten Elektromotor auf,
wobei der jeweilige Umrichter die jeweilige Motorspannung stellt. Von Vorteil ist dabei, dass die Drehzahl des Elektromotors mittels des Umrichters des Antriebs regelbar ist. Hierzu stellt der Umrichter die Motorspannung, wobei der Drehmomentistwert des Antriebs bestimmt wird. Dieser Drehmomentistwert wird an den übergeordneten Rechner übertragen und dort auf den zugehörigen Drehmomentsollwert hin geregelt, indem der Geschwindigkeitssollwert für den jeweiligen Antrieb entsprechend gestellt wird.

Bei einer vorteilhaften Ausgestaltung sind die von den Antrieben angetriebenen Wellen formschlüssig miteinander gekoppelt, insbesondere mittels Zahnrädern, oder kraftschlüssig gekoppelt sind, insbesondere mittels Reibschluss. Von Vorteil ist dabei, dass keine Verspannungskräfte sich aufbauen, da beim einem eventuellen "Vorauseilen" eines der Antriebe dessen Drehmoment ansteigt und somit dadurch vom übergeordneten Rechner die Geschwindigkeitssollwertvorgabe entsprechend heruntergeregelt wird.

Bei einer vorteilhaften Ausgestaltung wird bei dem System keine Master-Slave-Regelung ausgeführt. Von Vorteil ist dabei, dass keine Querkommunikation der Antriebe untereinander notwendig ist.

Wichtige Merkmale bei dem Verfahren zum Betreiben eines Systems mit Antrieben und übergeordnetem Rechner sind, dass jeder Antrieb einen umrichtergespeisten Elektromotor aufweist, wobei der jeweilige Antrieb ein Mittel zur Erfassung einer Geschwindigkeit aufweist, insbesondere jeweilige Drehgeschwindigkeit des Rotors des Elektromotors, wobei der jeweilige Umrichter einen jeweiligen Regler aufweist, welcher den jeweiligen Geschwindigkeitsistwert auf einen jeweiligen Geschwindigkeitssollwert hin regelt, indem die Motorspannung des jeweiligen Elektromotors entsprechend gestellt wird,
wobei der jeweilige Drehmomentistwert im Antrieb bestimmt wird und an den übergeordneten Rechner mittels Datenbusverbindung übertragen wird,
wobei der jeweilige Geschwindigkeitssollwert von einem Regler des übergeordneten Rechners als Stellwert bestimmt wird, indem der jeweilige Drehmomentistwert auf einen jeweiligen Drehmomentsollwert hin geregelt wird,
wobei der jeweilige Drehmomentsollwert als Funktion der Drehmomentistwerte bestimmt wird,
insbesondere

- wobei die jeweiligen Drehmomentsollwerte dem Mittelwert aller Drehmomentistwerte entsprechen oder
- wobei die jeweiligen Drehmomentsollwerte einem jeweiligen Anteil der Summe aller Drehmomentistwerte entsprechen.

Von Vorteil ist dabei, dass die Verteilung der Datenübertragungsrate zwischen dem übergeordneten Rechner und dem jeweiligen Antrieb gleichmäßig ist. Außerdem ist keine Querkommunikation zwischen den Antrieben notwendig. Somit ist eine besonders einfache Realisierung erreichbar.

Wichtige Merkmale bei dem System zur Durchführung des vorgenannten Verfahrens sind, dass keine Master-Slave-Regelung betrieben wird oder betreibbar ist. Von Vorteil ist dabei, dass alle Antriebe gleichwertig sind, insbesondere auch hinsichtlich der für die Regelung notwendigen Datenübertragungsrate und ihrem jeweiligen Anteil am gesamten Datenstrom. Von Vorteil ist dabei weiter, dass es im Gegensatz zur Master-Slave-Regelung erfindungsgemäß keine Querkommunikation innerhalb der Umrichter gibt, sondern alle Umrichter gleichermaßen von der übergeordneten Steuerung angesteuert werden und somit die Datenübertragungsrate gleichmäßig ist, insbesondere auch gleichmäßig verteilt ist.

Bei einer vorteilhaften Ausgestaltung weist der übergeordnete Rechner ein Umschaltmittel auf, insbesondere zur Umschaltung zwischen der Verwendung der ersten Größe und der anderen Größe, insbesondere bei dem Regelverfahren. Von Vorteil ist dabei, dass ein Umschalten zwischen der Verwendung der beiden verschiedenen Größen, wie Drehmoment und Position, ermöglicht ist, insbesondere im laufenden Betrieb.

Weitere Vorteile ergeben sich aus den Unteransprüchen.

Die Erfindung wird nun anhand von Abbildungen näher erläutert:

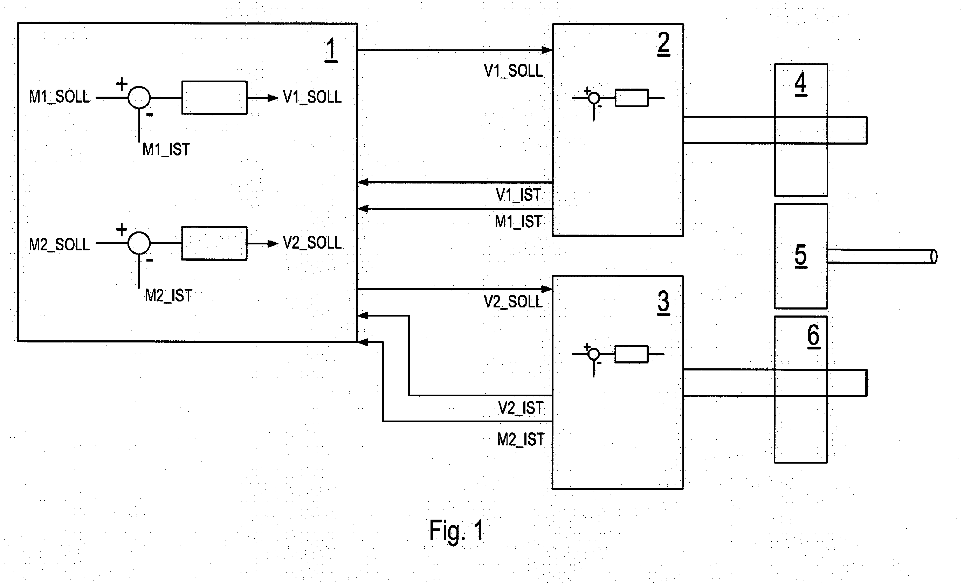

In der Figur 1 ist ein erfindungsgemäße Ausführungsbeispiel schematisch skizziert.

Dabei sind zwei Antriebe (2, 3) mechanisch gekoppelt vorgesehen.

Der erste Antrieb 2 weist einen umrichtergespeisten Elektromotor auf, der abtriebsseitig direkt oder über ein Getriebe ein erstes Zahnrad 4 antreibt, dessen Verzahnung im Eingriff steht mit der Verzahnung eines Sonnenrads 5, insbesondere also Zentralrads.

Die Verzahnung des Sonnenrads 5 wiederum steht mit der Verzahnung eines zweiten Zahnrades 6 im Eingriff, welches direkt oder über ein Getriebe von einem umrichtergespeisten Elektromotor eines zweiten Antriebs 3 angetrieben wird.

Jeder Umrichter weist eine Reglereinheit auf.

Dabei regelt die Reglereinheit des ersten Antriebs 2 den Geschwindigkeitsistwert V1_Ist auf einen Geschwindigkeitssollwert V1_Soll hin, indem sie einen Stellwert entsprechend stellt, insbesondere die Motorspannung für den Elektromotor des ersten Antriebs 2. Außerdem wird von der Reglereinheit des ersten Antriebs 2 der Drehmomentistwert M1_Ist bestimmt und über einen Datenbus an einen übergeordneten Rechner 1, also zentrale Steuerung, übertragen. Ebenso wird der Geschwindigkeitsistwert V1_Ist an die zentrale Steuerung übertragen. Von der zentralen Steuerung wird der Geschwindigkeitssollwert V1_Soll dem ersten Antrieb über den Datenbus übermittelt und vorgegeben.

Ebenso regelt die Reglereinheit des zweiten Antriebs 3 den Geschwindigkeitsistwert V2_Ist auf einen Geschwindigkeitssollwert V2_Soll hin, indem sie einen Stellwert entsprechend stellt, insbesondere die Motorspannung für den Elektromotor des zweiten Antriebs 3. Außerdem wird von der Reglereinheit des ersten Antriebs 2 der Drehmomentistwert M1_Ist bestimmt und über einen Datenbus an einen übergeordneten Rechner 1, also zentrale Steuerung, übertragen. Ebenso wird der Geschwindigkeitsistwert V1_Ist an die zentrale Steuerung übertragen. Von der zentralen Steuerung wird der Geschwindigkeitssollwert V1_Soll dem ersten Antrieb über den Datenbus übermittelt und vorgegeben.

Der übergeordnete Rechner 1 weist den jeweiligen Antrieben (2, 3) zugeordnete Regler auf.

Ein erster dieser Regler regelt den Drehmomentistwert M1_Ist des ersten Antriebs M1_Ist auf einen Drehmomentsollwert M1_Soll hin, indem er als Stellwert den Geschwindigkeitssollwert V1_Soll stellt.

Ein zweiter dieser Regler regelt den Drehmomentistwert M2_Ist des zweiten Antriebs M2_Ist auf einen Drehmomentsollwert M2_Soll hin, indem er als Stellwert den Geschwindigkeitssollwert V2_Soll stellt.

Die Drehmomentsollwerte (M1_Soll, M_2_Soll) bestimmt der zentrale Rechner beispielsweise als Funktion der Drehmomentistwerte (M1_Ist, M2_Ist).

Im Ausführungsbeispiel ist eine gleichmäßige Aufteilung das Ziel, also gilt:

$$M1\_Soll = (M1\_Ist + M2\_Ist) / 2$$

$$M2\_Soll = (M1\_Ist + M2\_Ist) / 2$$

In anderen Ausführungsbeispielen werden die Drehmomentsollwerte der Antriebe mit anderen Funktionen bestimmt, wie beispielsweise

$$M1\_Soll = a * M1\_Ist + b * M2\_Ist$$

$$M2\_Soll = c * M1\_Ist + d * M2\_Ist$$

wobei a, b, c, d Anteilsfaktoren sind, insbesondere jeweils eine rationale Zahl zwischen 0 und 1.

Alternativ ist auch jeweils eine allgemeine Funktion verwendbar gemäß:

$$M1\_Soll = f1(M1\_Ist, M2\_Ist)$$

$$M2\_Soll = f2(M1\_Ist, M2\_Ist)$$

wobei f1 und f2 jeweilige Funktionen sind.

Bei einem weiteren erfindungsgemäßen Ausführungsbeispiel ist statt der formschlüssigen Kopplung der Antriebe eine kraftschlüssige oder andersartige mechanische Kopplung der Antriebe vorgesehen.

Außerdem ist auch eine größere Anzahl von Antrieben einsetzbar, wobei die Regelung kaskadiert ausgeführt ist. Dabei wird also im übergeordneten Rechner 1 ein dem jeweiligen Antrieb zugeordneter Drehmomentsollwert bestimmt gemäß

$$M1\_Soll = f1(M1\_Ist, M2\_Ist, \ldots Mi\_Ist, \ldots, MN\_Ist)$$

$$M2\_Soll = f2(M1\_Ist, M2\_Ist, \ldots Mi\_Ist, \ldots, MN\_Ist)$$

$$\ldots$$

$$Mi\_Soll = fi(M1\_Ist, M2\_Ist, \ldots Mi\_Ist, \ldots, MN\_Ist)$$

$$\ldots$$

$$MN\_Soll = fN(M1\_Ist, M2\_Ist, \ldots Mi\_Ist, \ldots, MN\_Ist)$$

Wobei die Antriebe mit der Laufvariablen i nummeriert sind, welche von 1 bis N läuft.

Aus der jeweiligen Drehmomentsollwertvorgabe und dem jeweiligen Drehmomentistwert des jeweiligen Antriebs wird mittels eines jeweiligen Reglers des übergeordneten Rechners 1 ein jeweiliger Geschwindigkeitssollwert bestimmt, der an den jeweiligen Antrieb übertragen wird, dessen Regler seinen jeweiligen Geschwindigkeitsistwert auf den vom übergeordneten Rechner 1 übertragenen Geschwindigkeitssollwert hin regelt.

Bei einem weiteren erfindungsgemäßen Ausführungsbeispiel wird statt der in Figur 1 genannten Größe "Drehmoment" eine andere physikalische Größe verwendet, beispielsweise die "Position", insbesondere also Lage, des jeweiligen Antriebs.

Hierzu weist jeder Antrieb einen Positionserfassungssensor auf. Bei rotativen Elektromotoren wird hier ein üblicher Winkelsensor im oder am Elektromotor des Antriebs jeweils eingebaut oder angebaut. Die erfassten Winkelwerte stellen die Istwerte der Position dar.

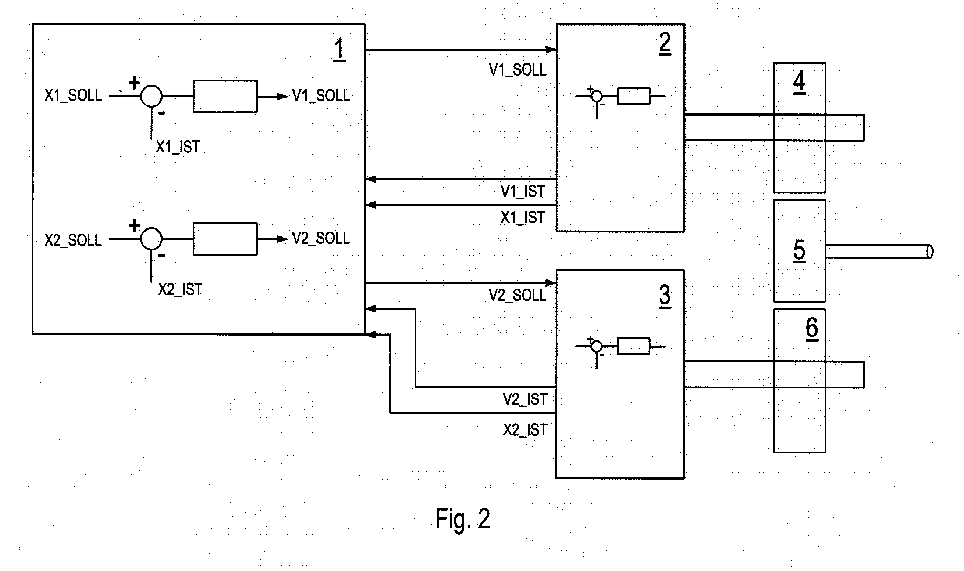

Wie in Figur 2 gezeigt, werden von dem ersten Antrieb 2 dessen jeweils aktuell erfasste Positionswerte X1_IST an den übergeordneten Rechner 1 übertragen und einem dortigen Regler zugeführt, welcher den Geschwindigkeitssollwert V1_Soll für den ersten Antrieb bestimmt.

Ebenso werden von dem zweiten Antrieb 3 dessen jeweils aktuell erfasste Positionswerte X2_IST an den übergeordneten Rechner 1 übertragen und einem dortigen weiteren Regler zugeführt, welcher den Geschwindigkeitssollwert V2_Soll für den zweiten Antrieb bestimmt.

Dabei wird der Sollwert X1_SOLL für den ersten Regler als Funktion der beiden Positionswerte X1_IST und X2_IST bestimmt. Entsprechend wird der Sollwert X2_SOLL für den zweiten Regler als Funktion der Ist-Positionswerte X1_IST und X2_IST der beiden Antriebe (2, 3) bestimmt. Dabei sind entsprechende Formeln wie die für Drehmoment oben genannten anwendbar.

Außerdem ist wiederum eine Anwendung auf mehrere Antriebe in analoger Weise erreichbar.

In einem weiteren Ausführungsbeispiel ist ein Mittel zum Umschalten zwischen der Ausführung nach Figur 1 und der Ausführung nach Figur 2 in der übergeordneten Steuerung vorhanden.

Somit ist also wahlweise im übergeordneten Rechner 1 eine übergeordnete Lageregelung oder eine übergeordnete Drehmomentenregelung realisierbar. Das Umschalten bewirkt also, dass statt der von den Antrieben (2, 3) an den übergeordneten Rechner 1 gelieferten Drehmomentistwerte Lageistwerte, also Positionsistwerte, bei der übergeordneten Regelung berücksichtigt werden oder umgekehrt. Die übergeordneten Regelungen bestimmen aber in jedem Fall die Geschwindigkeitssollwertvorgaben für die Antriebe (2, 3).

Besonders vorteilhaft ist das Umschalten zwischen den beiden Regelverfahren im laufenden Betrieb.

**Bezugszeichenliste**

1 übergeordneter Rechner
2 erster Antrieb
3 zweiter Antrieb
4 erstes Zahnrad
5 Sonnenrad
6 zweites Zahnrad
M1_Soll Drehmomentsollwert für ersten Antrieb
M2_Soll Drehmomentsollwert für zweiten Antrieb
V1_Soll Geschwindigkeitssollwert für ersten Antrieb
V2_Soll Geschwindigkeitssollwert für zweiten Antrieb
M1_Ist Drehmomentistwert für ersten Antrieb
M2_ Ist Drehmomentistwert für zweiten Antrieb

V1_Ist Geschwindigkeitsistwert für ersten Antrieb
V2_Ist Geschwindigkeitsistwert für zweiten Antrieb

**Patentansprüche**

1. Verfahren zum Betreiben eines Systems mit mechanisch miteinander, insbesondere schlupffrei, gekoppelten Antrieben (2; 3) und übergeordnetem Rechner (1), welcher mittels Datenbusverbindung mit den Antrieben (2; 3) verbunden ist, wobei in jedem Antrieb ein jeweiliger Größenistwert, also Istwert einer physikalischen Größe des jeweiligen Antriebs, bestimmt und, insbesondere mittels Datenbusverbindung, an den übergeordneten Rechner übertragen wird,
   wobei der übergeordnete Rechner für jeden Antrieb einen diesem jeweiligen Antrieb zugeordneten Größensollwert, also Sollwert einer physikalischen Größe des jeweiligen Antriebs, bestimmt,
   wobei der übergeordnete Rechner (1) Regler aufweist, wobei jedem Antrieb einer der Regler, insbesondere eindeutig, zugeordnet ist, wobei der dem jeweiligen Antrieb zugeordnete Regler den Größenistwert des jeweiligen Antriebs auf den Größensollwert des jeweiligen Antriebs hin regelt, indem er als Stellwert einen dem jeweiligen Antrieb zugeordneten Geschwindigkeitssollwert bestimmt und, insbesondere mittels Datenbusverbindung, an den jeweiligen Antrieb übermittelt,
   wobei der jeweilige Antrieb einen jeweiligen Regler aufweist, welchem der jeweilige, im Antrieb bestimmte Geschwindigkeitsistwert eines Elektromotors des Antriebs zugeführt wird und welcher diesen jeweiligen Geschwindigkeitsistwert auf den vom übergeordneten Rechner übermittelten, jeweiligen Geschwindigkeitssollwert hin regelt, indem er die Motorspannung oder den Motorstrom des Elektromotors des jeweiligen Antriebs stellt,

   - **gekennzeichnet durch** einen Schritt des Umschaltens im laufenden Betrieb, der bewirkt, dass statt der physikalischen Größe des Antriebs eine andere physikalische Größe des Antriebs zur Regelung verwendet wird, wobei das Umschalten wahlweise erfolgt, dass also derart umgeschaltet wird, dass statt des Istwerts der physikalischen Größe des jeweiligen Antriebs der Istwert einer anderen physikalischen Größe des jeweiligen Antriebs verwendet wird und dass statt des Sollwerts der physikalischen Größe des jeweiligen Antriebs der Sollwert der anderen physikalischen Größe des jeweiligen Antriebs verwendet wird.

2. Verfahren nach Anspruch 1,
   **dadurch gekennzeichnet, dass**
   die jeweilige Größe die jeweilige Position oder das jeweilige Drehmoment des jeweiligen Antriebs ist.

3. Verfahren nach mindestens einem der vorangegangenen Ansprüche,
   **gekennzeichnet durch** das Vorsehen von linearen Reglern, insbesondere PI-Regler, als die Regler der Antriebe und/oder die Regler des übergeordneten Rechners.

4. Verfahren nach mindestens einem der vorangegangenen Ansprüche, **gekennzeichnet durch** das Vorsehen eines Elektromotors für den jeweiligen Antrieb der von einem jeweiligen Umrichter des Antriebs gespeist wird, wobei der jeweilige Umrichter die jeweilige Motorspannung stellt.

5. Verfahren nach mindestens einem der vorangegangenen Ansprüche,
   **dadurch gekennzeichnet, dass**
   die von den Antrieben angetriebenen Wellen formschlüssig miteinander gekoppelt werden, insbesondere mittels Zahnrädern, oder kraftschlüssig gekoppelt werden, insbesondere mittels Reibschluss.

6. Verfahren nach mindestens einem der vorangegangenen Ansprüche, **dadurch gekennzeichnet, dass**
   bei dem System keine Master-Slave-Regelung ausgeführt wird.

7. Verfahren nach mindestens einem der vorangegangenen Ansprüche, **gekennzeichnet durch** das Vorsehen von mehr als zwei Antrieben.

**Claims**

1. Method for operating a system comprising drives (2; 3) which are mechanically coupled to one another, in particular without slip, and a higher-level computer (1) which is connected to the drives (2; 3) by means of data bus connection,

wherein, in each drive, a respective parameter actual value, that is to say an actual value of a physical parameter of the respective drive, is determined and is transmitted to the higher-level computer, in particular by means of data bus connection,

wherein the higher-level computer determines for each drive a parameter setpoint value assigned to said respective drive, that is to say a setpoint value of a physical parameter of the respective drive,

wherein the higher-level computer (1) has controllers, one of the controllers being assigned, in particular uniquely assigned, to each drive,

wherein the controller assigned to the respective drive adjusts the parameter actual value of the respective drive to the parameter setpoint value of the respective drive by determining as the control value a speed setpoint value assigned to the respective drive and transmitting this to the respective drive, in particular by means of data bus connection,

wherein the respective drive has a respective controller, to which the respective speed actual value of an electric motor of the drive, determined in the drive, is fed and which adjusts this respective speed actual value to the respective speed setpoint value, transmitted by the higher-level computer, by adjusting the motor voltage or the motor current of the electric motor of the respective drive,

**characterized by** a changeover step during operation, as a result of which, instead of the physical parameter of the drive, a different physical parameter of the drive is used for control purposes, the changeover taking place selectively, that is to say the changeover being such that, instead of the actual value of the physical parameter of the respective drive, the actual value of a different physical parameter of the respective drive is used, and such that, instead of the setpoint value of the physical parameter of the respective drive, the setpoint value of the different physical parameter of the respective drive is used.

2. Method according to claim 1, **characterized in that** the respective parameter is the respective position or the respective torque of the respective drive.

3. Method according to at least one of the preceding claims, **characterized by** providing linear controllers, in particular PI controllers, as the controllers of the drives and/or the controllers of the higher-level computer.

4. Method according to at least one of the preceding claims, **characterized by** providing an electric motor for the respective drive, which electric motor is powered by a respective converter of the drive, the respective converter adjusting the respective motor voltage.

5. Method according to at least one of the preceding claims, **characterized in that** the shafts driven by the drives are coupled to one another with a form fit, in particular by means of toothed wheels, or are coupled with a force fit, in particular by means of frictional engagement.

6. Method according to at least one of the preceding claims, **characterized in that** no master-slave control is implemented in the system.

7. Method according to at least one of the preceding claims, **characterized by** providing more than two drives.

**Revendications**

1. Procédé de fonctionnement d'un système comprenant des entraînements (2 ; 3) accouplés mécaniquement les uns aux autres, en particulier sans glissement, et un ordinateur (1) de niveau supérieur qui est relié aux entraînements (2 ; 3) au moyen d'une liaison de bus de données,

dans chaque entraînement une valeur de grandeur réelle respective, c'est-à-dire la valeur réelle d'une grandeur physique de l'entraînement respectif, étant déterminée et transmise à l'ordinateur de niveau supérieur, en particulier au moyen d'une liaison de bus de données, l'ordinateur de niveau supérieur déterminant pour chaque entraînement une valeur de grandeur de consigne associée à cet entraînement respectif, c'est-à-dire une valeur de consigne d'une grandeur physique de l'entraînement respectif,

l'ordinateur (1) de niveau supérieur comportant des régulateurs, chaque entraînement étant associé à l'un des régulateurs, en particulier de manière unique,

le régulateur associé à l'entraînement respectif régulant la valeur de grandeur réelle de l'entraînement respectif sur la valeur de grandeur de consigne de l'entraînement respectif en déterminant comme valeur de commande une valeur de vitesse de consigne, associée à l'entraînement respectif, et en la transmettant à l'entraînement respectif, en particulier au moyen d'une liaison de bus de données,

l'entraînement respectif comportant un régulateur respectif auquel est amenée la valeur de vitesse réelle respective, déterminée dans l'entraînement, d'un moteur électrique de l'entraînement et qui régule cette valeur de vitesse réelle respective sur la valeur de vitesse de consigne respective transmise par l'ordinateur de niveau supérieur en réglant la tension de moteur ou le courant de moteur du moteur électrique de l'entraînement respectif,

- **caractérisé par** une étape de commutation pendant le fonctionnement, qui a pour effet que, à la place de la grandeur physique de l'entraînement, une autre grandeur physique de l'entraînement est utilisée pour la régulation, la commutation étant effectuée facultativement, c'est-à-dire que la commutation est effectuée de telle sorte que la valeur réelle d'une autre grandeur physique de l'entraînement respectif soit utilisée à la place de la valeur réelle de la grandeur physique de l'entraînement respectif et la valeur de consigne de l'autre variable physique de l'entraînement respectif soit utilisée à la place de la valeur de consigne de la grandeur physique de l'entraînement respectif.

2. Procédé selon la revendication 1,
   **caractérisé en ce que**
   la grandeur respective est la position respective ou le couple respectif de l'entraînement respectif.

3. Procédé selon l'une au moins des revendications précédentes, **caractérisé par** le fait de prévoir des régulateurs linéaires, en particulier des régulateurs PI, comme régulateurs des entraînements et/ou comme régulateurs de l'ordinateur de niveau supérieur.

4. Procédé selon l'une au moins des revendications précédentes,
   **caractérisé par** le fait de prévoir un moteur électrique pour l'entraînement respectif qui est alimenté par un convertisseur respectif de l'entraînement,
   le convertisseur respectif réglant la tension de moteur respective.

5. Procédé selon l'une au moins des revendications précédentes,
   **caractérisé en ce que**
   les arbres entraînés par les entraînements sont accouplés les uns aux autres par une liaison par complémentarité de formes, notamment au moyen de roues dentées, ou sont couplés par une liaison en force, notamment au moyen d'une liaison à friction.

6. Procédé selon l'une au moins des revendications précédentes,
   **caractérisé en ce que**
   aucune régulation maître-esclave n'est effectuée dans le système.

7. Procédé selon l'une au moins des revendications précédentes, **caractérisé par** le fait de prévoir plus de deux entraînements.

Fig. 1

EP 3 501 093 B1

Fig. 2

4

5

6

2

3

1

V1_SOLL

V1_IST

X1_IST

V2_SOLL

V2_IST

X2_IST

V1_SOLL

X1_SOLL

X1_IST

V2_SOLL

X2_SOLL

X2_IST

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013002782 A1
- DE 102013016770 A1
- DE 102014115881 A1
- DE 102010020598 A1